# EUROPEAN PATENT APPLICATION

(11) **EP 1 323 582 A2**
(43) Date of publication of application: **02.07.2003**
(21) Application number: 02447225.0
(22) Date of filing: 19.11.2002
(51) Int. Cl.: B60R 1/02

(54) **Blind spot mirror**

(30) Priority: 19.11.2001 EP 01870247
(71) Applicant: Goetschalckx, Peter, 2990 Wuustwezel (BE)
(72) Inventor: Goetschalckx, Peter, 2990 Wuustwezel (BE)
(74) Representative: Luys, Marie-José A.H.

(57) **Abstract**

The present invention relates to a trailer vehicle (1) having a cabin (2) and a trailer (3) rotatably connected together about a first axis extending in height direction of the vehicle (1) and comprising a rear-view mirror (11) disposed at one side of the cabin (2). The rear-view mirror (11) is rotatably mounted about a second axis substantially parallel with the first axis. The trailer vehicle (1) comprises means for rotating the rear-view mirror (11) about the second axis in a second sense in response to the rotation of the cabin (2) about the first axis in a first sense opposite to the second sense when the trailer vehicle (1) is changing direction.

## Description

The present invention relates to a trailer vehicle having a cabin and a trailer rotatably connected together about a first axis extending in the height direction of the vehicle and comprising a rear-view mirror disposed at one side of the cabin, rotatably mounted about a second axis substantially parallel with the first axis.

It is known from the state of the art to provide busses with such a rear-view mirror, generally located before the foremost part of the vehicle, in order that an entire side of the vehicle and the space aside can be observed by the bus driver, including the space around the front corner of the bus on the side of the latter at which the rear-view mirror is located. The exact aforementioned space aside which can be observed in the mirror depends on its intrinsic properties. Generally spoken, this space is enclosed between a first plane comprising the considered side of the vehicle and a second plane which intersects the first plane at the height of the mirror along a line directed in the height of the vehicle and which is angled of less than 90° on the first plane. Thus, the driver of the vehicle equipped with such a mirror on the side of the vehicle in the direction of which this driver intends to turn the vehicle sees which objects are in the considered space before turning his vehicle as well as at each moment during the turning movement and there is thus no risk of hurting cyclists or pedestrians during this movement.

In contrast to a bus or monolithic truck, being built as one piece and therefore moving as one entity, a trailer vehicle does however not move as one entity since it consists of a cabin and a trailer. The trailer is being pulled by the cabin and is aligned with the latter when the trailer vehicle is driven along a straight line. However, the cabin rotates about a vertical axis located between the cabin and the trailer when the trailer vehicle is turning left or right so that the respective sides of the cabin and the trailer located on the same side of the trailer vehicle are then not aligned anymore but angled of less than 180°. Consequently, when the trailer truck is provided with a rear-view mirror as here above described on the side of the cabin in the direction of which the trailer truck is turning, during this turning, contrary with a bus or a monolithic truck, the image reflected by this mirror will essentially be that of the trailer since the latter then occupies most of the space that is reflected by the mirror, on the detriment of the objects situated aside the trailer, which therefore risk to be hurt during the turning of the trailer truck.

It is the object of the present invention to provide a trailer vehicle comprising a rear-view mirror which overcomes this problem.

This is achieved thanks to the fact that the trailer vehicle according to the invention comprises means for rotating the rear-view mirror about the second axis in a second sense in response to the rotation of the cabin about the first axis in a first sense opposite to the second sense when the trailer vehicle is changing direction.

Consequently, during the turning of the trailer vehicle to a direction which is that of the side of the trailer vehicle at which the rear-view mirror is located, this mirror will then keep reflecting the space aside this side of the trailer and not the trailer itself as with the rear-view mirrors according to the state of the art. There is thus no risk that pedestrians or cyclists are hurt by the trailer truck during its turning movement.

Preferred embodiments of the invention are disclosed in the dependent claims.

The invention is further elucidated in the figures and description of the figures, which are not limitative for the scope of protection of the invention.

In Figure 1, a view from above of a trailer truck according to the invention is shown.

In Figure 2, a side view on the cabin of the trailer truck shown in Figure 1 is shown.

In Figure 3, a system by which the rotation and position of the rear-view mirror of the trailer truck shown in Figure 1 is coupled to the rotation and position of the steering wheel of the trailer truck is schematically shown.

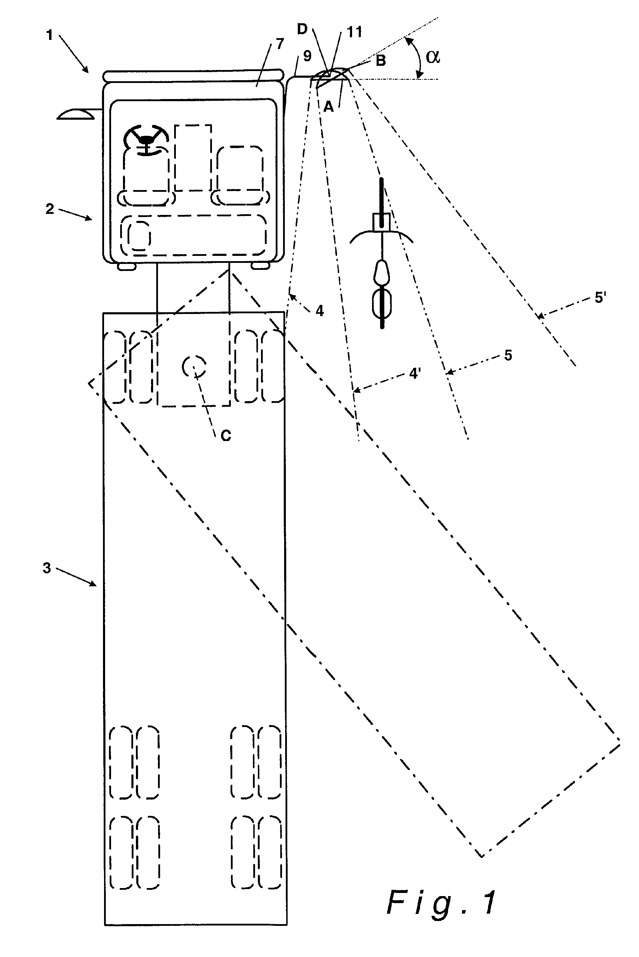

The trailer truck 1 shown in Figure 1 comprises a cabin 2 and a trailer 3, whereby the trailer 3 and cabin 2 are rotatably connected together about a first axis C extending in the height direction of the trailer vehicle 1. When the truck 1 is driven along a straight line, the trailer 3 and cabin 2 are aligned. When the trailer truck 1 is turning to the right as shown in Figure 1 by the dashed lines, the cabin 1 rotates about the first vertical axis C in a first sense so that the right sides of the cabin 2 and trailer 3 are angled of less than 180°.

The trailer truck 1 shown in Figure 1 is provided with a rear-view mirror 11 on the side of the cabin 1 in the direction of which the trailer vehicle 1 is turning, i.e. at the right side.

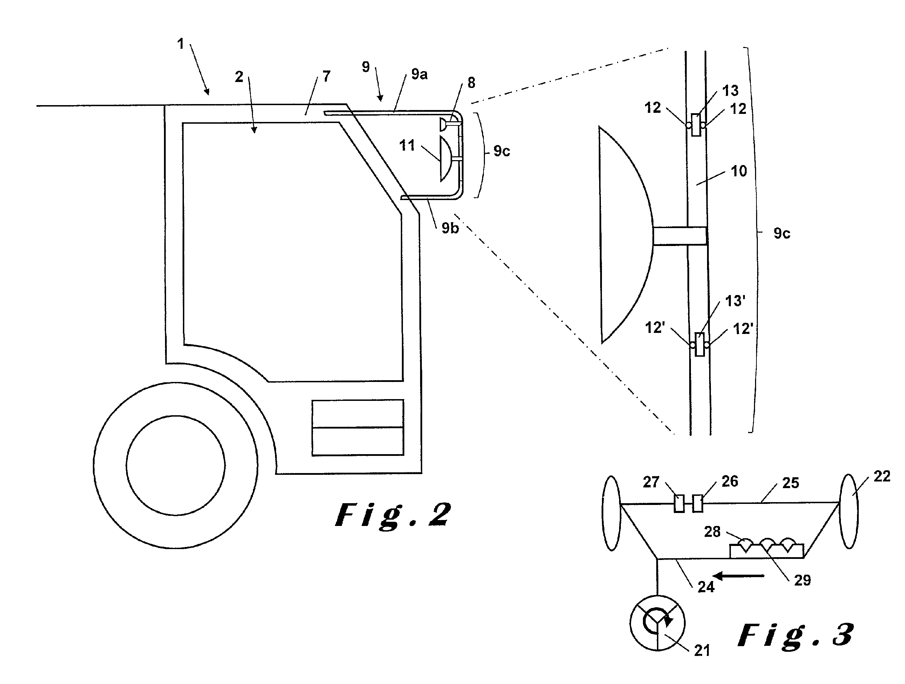

The rear-view mirror 11 is rotatably mounted about a second axis D substantially parallel with the first axis. This axis may either be a vertical axis of the mirror 11 itself, or may be the vertical part of the frame 9 to which the mirror is fixed, as shown in Figure 2.

In Figure 2, this frame 9 is mounted on the bodywork 7 at the right side of the cabin 2. The frame 9 consists of two parallel horizontal parts, an upper 9a and a lower 9b part, and a vertical part 9c connecting these horizontal parts 9a and 9b. The frame 9 is mounted in such a way that the horizontal parts 9a and 9b extend away from the front of the trailer vehicle 1 in longitudinal direction of the trailer vehicle 1, such that the vertical part 9c is situated in front of the foremost part of the cabin 2. The vertical part 9c of the frame 9 includes a vertical middle part 10 which is rotationally mounted about its longitudinal axis and to which the rear-view mirror 11 is fixed. The vertical middle part 10 comprises the second axis D substantially parallel with the first axis C shown in Figure 1. To allow the rotation of the middle part 10, ball bearings 12, 12' are present between the top respectively bottom end of the middle part 10 and the adjacent frame portions 9c. In between the ball bearings 12, 12' at each end of the middle part 10, a short axis member 13, 13' with a smaller diameter as compared to the diameter of the middle part 10 and its adjacent frame portions 9c is inserted. The short axes members 13, 13' extend partly throughout the middle part 10 and partly throughout the upper respectively lower frame portion 9c. Through this construction, the middle part 10 can rotate around these short axes members 13, 13', the latter remaining fixed like the rest of the frame 9. The rear-view mirror 11 can however be mounted in any other way allowing the rear-view mirror 11 to rotate about the second axis D substantially parallel with the first axis C shown in Figure 1.

The trailer vehicle 1 comprises means for rotating the rear-view mirror 11 about the second axis in a second sense in response to the rotation of the cabin 2 about the first axis in a first sense opposite to the second sense when the trailer vehicle 1 is changing direction.

In Figure 1, two positions of the rear-view mirror 11 are shown. The rear-view mirror 11 is in position A when the trailer vehicle has not yet turned right. In this position, the trailer 3 is aligned with the cabin 2. In this position, the plane of the rear-view mirror surface 11 runs substantially parallel with a vertical plane extending in width direction of the cabin 2. When the truck turns to the right, the rear-view mirror 11 is rotated about an angle α to a position B about the second vertical axis D. With a rear-view mirror that cannot rotate about the second axis D in a second sense opposite to the first sense of the rotation of the cabin 2 about the first vertical axis C when the trailer vehicle is changing direction, the rear-view mirror would still have been in position A when the trailer vehicle 1 has turned right. In such a case, the area at the right side of the trailer 3 which can be seen by the driver in the mirror is the space enclosed between planes 4 and 5. In this case, the image reflected by the mirror would essentially be that of the trailer 3 itself since the latter then occupies most of the space that is reflected by the mirror. With the trailer vehicle according to the invention, the area that can be seen by the driver in the mirror when he turns the trailer vehicle 1 to the right is the area between planes 4' and 5'. Thus, the mirror 11 reflects the space aside the trailer 3 and not the trailer 3 itself.

In countries where the traffic is driving at the left side of the road, the mirror 11 is mounted at the left side of the trailer vehicle 1. Similarly as described above, when the truck is turned to the left, the mirror will rotate in the second sense opposite to the first sense of the rotation of the cabin about the first axis.

In a preferred embodiment, the means for rotating the rear-view mirror 11 are arranged for rendering the amplitude of rotation of the rear-view mirror 11 about the second axis proportional to the amplitude of rotation of the cabin 2 about the first axis when the trailer vehicle 1 is changing direction. In this way, it is assured that during the turning of the trailer vehicle to a direction which is the side of the trailer vehicle 1 at which the rear-mirror 11 is located, this mirror 11 will always reflects the space aside this side of the trailer and not the trailer itself.

The means for rotating the rear-view mirror 11 in response to the rotation of the cabin when the trailer vehicle is changing direction, comprise a steering wheel 21 for changing direction of the trailer vehicle 1. In Figure 3, the steering wheel, being coupled to the steering axle 4, is shown. The steering axle 4 is provided with a toothed slat 23. This toothed slat 23 is provided with spherical projections 28 present in the gaps 29 of the toothed slat 23. The front axle 25 is provided with a detector 26 provided for detecting the teeth or gaps on the toothed slat and with a mechanical switch 27 which can be switched on by the spherical projections 28. The detector 26 may be any suitable detector known to the man skilled in the art, and may for example be a proximity switch or sensor. In a top view of the trailer vehicle, the detector 26 and the switch 27 on the front axle 25 are situated on the left with respect to the toothed slat 23 on the steering axle 24.

When the truck is turned to the right, the steering axle 24 moves with respect to the front axle 5 parallel to the left, i.e. in the direction of the detector and the switch, whereas the front axle 25 does not move. Consequently, the toothed slat 23 with the spherical projections 28 and the gaps 29 passes by the detector 26 and the switch 27. The detector 26 detects the passing gap 29 in the toothed slat 23, resulting in an electric signal. The switch 27 is activated by the physical contact between the passing spherical projection 28 and the switch, resulting in a mechanical signal. The switch 27 can be switched on by a spherical projection 28 only when the spherical projection 28 passes the switch 27 from the right to the left, and not when the projection passes the switch from the left to the right. Thus, by turning the steering wheel 21 to the right, there is both an electrical as well as a mechanical detection. In response to this double signal, i.e. an electrical and a mechanical signal, the rear-view mirror 11 will be rotated about the second axis D, parallel with the first axis C shown in Figure 1, in the second sense opposite to the first sense of rotation of the cabin about the first axis C over a given, pre-set angle. Thus, for the embodiment shown in Figure 2, this double signal will direct the middle part 10 of the frame 9 on which the rear-view mirror 11 is fastened, to rotate in the second sense opposite to the first sense of the rotation of the cabin about the first axis C, i.e. counter clockwise seen from above on the axis D over a given pre-set angle, for example 5°. As the turning of the steering wheel 21 proceeds during the turning of the truck to the right, the steering axle 24 further moves to the left. Consequently, the next gap 29 passes by the detector 26 and the next spherical projection 28 passes by the mechanical switch 27, resulting in a second double signal. Thus, each time a double signal is generated, this signal is transmitted to the motor directing the axle 10 on which the rear-view mirror 11 is mounted to rotate over a given angle until the rear-view mirror 11 reaches its end position, corresponding to for example a total rotation over an angle of 15°. It is clear that variations can occur in the amount of gaps and spherical projections in the toothed slat, the angle over which the rear-view mirror rotates each time a double detection occurs, and in the total angle over which the rear-view mirror can be rotated.

After having turned the steering wheel to the right, the steering wheel is subsequently turned back to the left to return the wheels of the cabin back to their forward oriented position, i.e. the position whereby the cabin and trailer are aligned again. Consequently, the steering axle moves back to its rest position and thus the toothed slat passes again by the detector and the switch, but now from the left to the right. The detector detects the passing gap in the toothed slat, resulting in an electric signal. Because the spherical projections now pass the switch from the left to the right, the switch can not be activated by these spherical projections. Consequently, by turning the steering wheel back to the left, there is only an electrical detection. This single signal directs the axle on which the rear-view mirror is fastened to rotate back, thus clockwise seen from above on the axle, over the same given pre-set angle. Each time a single signal is generated, this signal is transmitted to the motor directing the axle to rotate over a given angle until the rear-view mirror reaches again to its rest position, i.e. the position in which the plane of the mirror surface runs parallel with the vertical plane extending in width direction of the cabin of the trailer vehicle.

From the above it is clear that, with the above described arrangement of the detector and switch with respect to the toothed slat, when a driver turns to the left with his trailer vehicle, the rear-view mirror mounted at the right side of the vehicle will not rotate since the steering axle moves from its rest position parallel to the right with respect to the front axle, i.e. away from the detector and the switch. Consequently, the toothed slat with the spherical projections and the gaps does not pass by the detector and the switch on the front axle.

The above described arrangement of the detector and switch with respect to the toothed slat will allow the rotation of the mirror only when the truck turns to the right. This arrangement is therefore suited for trucks driving on the continent, i.e., where traffic is driving at the right side of the road. For trucks driving in e.g. England or Australia, however, the detector and switch will have to be arranged with respect to the toothed slat in such a way as to allow the mirror disposed at the left side of the trailer truck to rotate when the truck is turned to the left.

Any other means for rotating the rear-view mirror 11 in response to the rotation of the cabin when the trailer vehicle is changing direction suitable to the man skilled in the art are however also possible.

In a preferred embodiment, these means for rotating the rear-view mirror are arranged for rotating the rear-view mirror about the second axis continuously in response to the rotation of the steering wheel. In this way, it is assured that during the turning of the trailer vehicle to a direction which is the side of the trailer vehicle at which the rear-mirror is located, this mirror will always reflects the space aside this side of the trailer and not the trailer itself.

In another preferred embodiment, these means for rotating the rear-view mirror are arranged for rotating the rear-view mirror between a plurality of discrete positions in response to corresponding positions of the steering wheel.

In Figure 1, the rear-view mirror 11 is positioned before the foremost part of the cabin 2. By having the rear-view mirror 11 positioned before the foremost part of the cabin 2, the space around the front corner of the cabin 2 of the trailer vehicle 1 at the side of the latter at which the rear-view mirror 11 is located can be observed by the driver when the cabin and trailer are aligned, i.e., before turning the truck in the direction which is that at which the mirror 11 is located. In this way, pedestrians or bicycles positioned at the height of this front corner can be observed by the driver before the turns his truck in the direction which is that at which the mirror 11 is located. As such, the risk of them to be hurt when the truck turns right is minimised.

A reset button may be provided to allow positioning the rear-view mirror in its resting position when defects occur or the circumstances so demand.

In Figure 2 it is shown that above this rotatable rear-view mirror 11 in height direction of the trailer vehicle 1, a second mirror 8 may be mounted on the non-rotatable part of the vertical frame 9c. Hereby it is assured that during the turning of the trailer vehicle to a direction which is the side of the trailer vehicle at which this mirror 8 is located, this mirror 8 will reflect the space aside this side of the cabin. This does not require a concentrated image; the observation of a movement is already sufficient. The fixed mirror 8 may be a parabolic mirror, whereas the rotatable rear-view mirror 11 may be a flat mirror.

## Claims

1. A trailer vehicle (1) having a cabin (2) and a trailer (3) rotatably connected together about a first axis extending in height direction of the vehicle (1) and comprising a rear-view mirror (11) disposed at one side of the cabin (2), the rear-view mirror (11) being rotatably mounted about a second axis substantially parallel with the first axis; **characterized in that** the trailer vehicle (1) comprises means for rotating the rear-view mirror (11) about the second axis in a second sense in response to the rotation of the cabin (2) about the first axis in a first sense opposite to the second sense when the trailer vehicle (1) is changing direction.

2. A trailer vehicle (1) as claimed in claim 1, **characterised in that** the means for rotating the rear-view mirror (11) are arranged for rendering the amplitude of rotation of the rear-view mirror (11) about the second axis proportional to the amplitude of rotation of the cabin (2) about the first axis when the trailer vehicle (1) is changing direction.

3. A trailer vehicle (1) as claimed in claims 1-2, **characterized in that** the means for rotating the rear-view mirror (11) comprise a steering wheel (21) for changing direction of the trailer vehicle (1).

4. A trailer vehicle (1) as claimed in claim 3, **characterized in that** the means for rotating the rear-view mirror (11) are arranged for rotating the rear-view mirror (11) about the second axis continuously in response to the rotation of the steering wheel (21).

5. A trailer vehicle (1) as claimed in claim 3, **characterized in that** the means for rotating the rear-view mirror (11) are arranged for rotating the rear-view mirror (11) between a plurality of discrete positions in response to corresponding positions of the steering wheel (21).

6. A trailer vehicle (1) as claimed in claims 1-5, **characterised in that** the rear-view mirror (11) is positioned before the foremost part of the vehicle (1).
